# EUROPEAN PATENT SPECIFICATION

(11) **EP 1 505 273 B1**
(45) Date of publication and mention of the grant of the patent: **13.07.2011**
(21) Application number: 04254679.6
(22) Date of filing: 04.08.2004
(51) Int. Cl.: F01P 11/02, F28F 9/02

(54) **Cooling system expansion tank**
Ausgleichbehälter eines Kühlkreislaufes
Vase d'expansion pour un système de refroidissement

(30) Priority: 06.08.2003 GB 0318402
(43) Date of publication of application: 09.02.2005
(73) Proprietor: Land Rover, Gaydon Warwick Warwickshire CV35 0RR (GB)
(72) Inventor: Hutchins, William Richard, Kenilworth Warwickshire CV8 1PP (GB)
(74) Representative: Holmes, Matthew William

(56) References cited:
- DE-A1- 2 433 049
- DE-A1- 10 041 121
- DE-U- 9 002 439
- US-A- 4 098 328
- US-A- 5 329 889
- US-A- 5 680 833
- US-A- 5 829 268
- US-B1- 6 216 646

## Description

This invention relates to expansion tanks for the cooling systems of liquid cooled internal combustion engines.

A typical cooling system expansion tank is a closed vessel which, when the engine is at rest, is only partially filled with liquid coolant, the remainder of the space above the liquid being available for the volumetric expansion of the coolant due to heat. Coolant discharged from the engine flows into the tank above the level of liquid coolant and returns from the bottom of the tank to join the flow of coolant returned to the engine. Such an expansion tank also serves as a means of enabling gases dissolved or trapped in the coolant to rise to the liquid surface and escape. Furthermore, air above the liquid surface becomes heated by the incoming coolant, thereby further helping to pressurise the cooling system and prevent cavitation in a circulation pump.

Known expansion tanks can have several drawbacks in terms of their ability to dissipate trapped air, to pressurise rapidly and to enable manufacture without expensive tooling.

An object of the present invention is provide an expansion tank which can incorporate features which address some or all of these problems.

DE-A-10041121 discloses an expansion tank having the features of the precharacterizing portion of claim 1.

US-A-5329889 discloses a multi chamber expansion tank.

According to the present invention there is provided an expansion tank for the cooling system of a liquid-cooled internal combustion engine, the tank comprising a housing having an inlet port for connection to a supply of coolant discharged from the engine, the inlet port opening into an inlet passageway in the tank and extending from the inlet port towards an opening within the tank, the inlet passageway having a plurality of baffles therein forming a labyrinthine flow path for the coolant so that in use flow of coolant through the inlet passageway induces a pressure loss between the inlet port and the opening, characterized in that at least some of the baffles are arranged in pairs, the baffles being formed alternately on one side of the inlet passageway and the other, the length of the inlet passageway between one adjacent pair of baffles and the next forming a respective swirl chamber in which the coolant is induced to swirl.

Other features of the invention will be apparent from the appended sub-claims.

Where the housing is made from two mouldings with vertical joint faces as previously stated, the tank may include a float for sensing coolant level and which is guided for vertical movement on a post formed on one of said side components. The float may be surrounded by a cowl formed on the other of said side components.

The invention will now be described by way of example and with reference to the accompanying drawings, of which:-
Fig.1 is a diagrammatic representation of the cooling system of a liquid cooled internal combustion engine incorporating an expansion tank according to the invention;
Fig.2 is a diagrammatic cross-sectional representation of the expansion tank shown in Fig.1 to illustrate the design concept;
Fig.3 is an isometric internal view of a left hand side component of the expansion tank shown in Fig.1;
Fig.4 is an isometric internal view of a right hand side component of the expansion tank shown in Fig.1;
Fig.5 is a perspective view of an hexagonal chamber shown in Figs. 2-4;
Fig.6A is a schematic section of the lower portion of the hexagonal chamber shown in Fig.5 to illustrate the flow of coolant;
Fig.6B is a schematic plan view in the direction of arrow A in Fig.6B to illustrate the flow of coolant in the lower portion of the hexagonal chamber shown in Fig.5;
Fig.7 is a schematic isometric view of the hexagonal chamber shown in Figs. 5 and 6; and
Fig.8 is a simplified vertical section through the expansion tank shown in Fig.1 to indicate the directions of coolant flow through the tank.

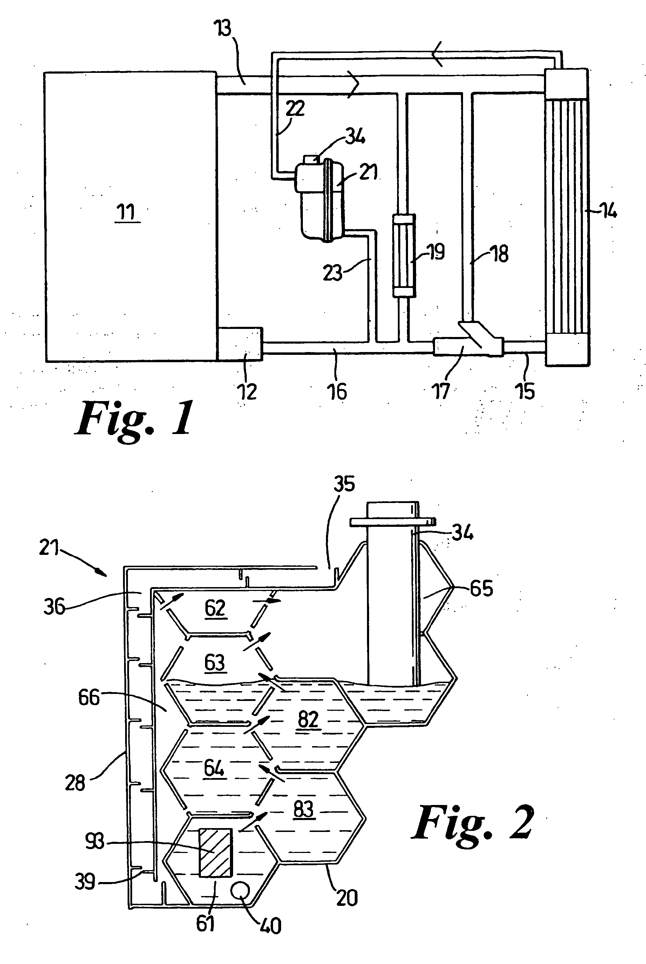

Referring to Fig.1, an internal combustion engine 11 has a pump 12 which can deliver liquid coolant (e.g., a water/antifreeze mix) through the engine 11 to an engine delivery hose 13 and a heat exchanger in the form of a conventional air cooled radiator 14. Flow from the radiator 14 back to the pump 12 passes through a radiator return hose 15, a thermostatically controlled bypass valve 17, and a pump return hose 16. The control valve 17 operates to control flow in the radiator return hose 15 and in a bypass hose 18 such that until the coolant reaches higher temperatures most of the flow of coolant from the engine 11 is through the bypass hose 18 and there is no flow through the radiator 14. At higher coolant temperatures, most of the flow passes through the radiator 14.

An expansion tank 21 has a tank feed hose 22 connected to the radiator 14 (or to any convenient point in the engine delivery hose 13) and a tank return hose 23 connected to the pump return hose 16. A heater matrix 19 for the heating the vehicle passenger compartment is also connected between the engine delivery hose 13 and the pump return hose 16.

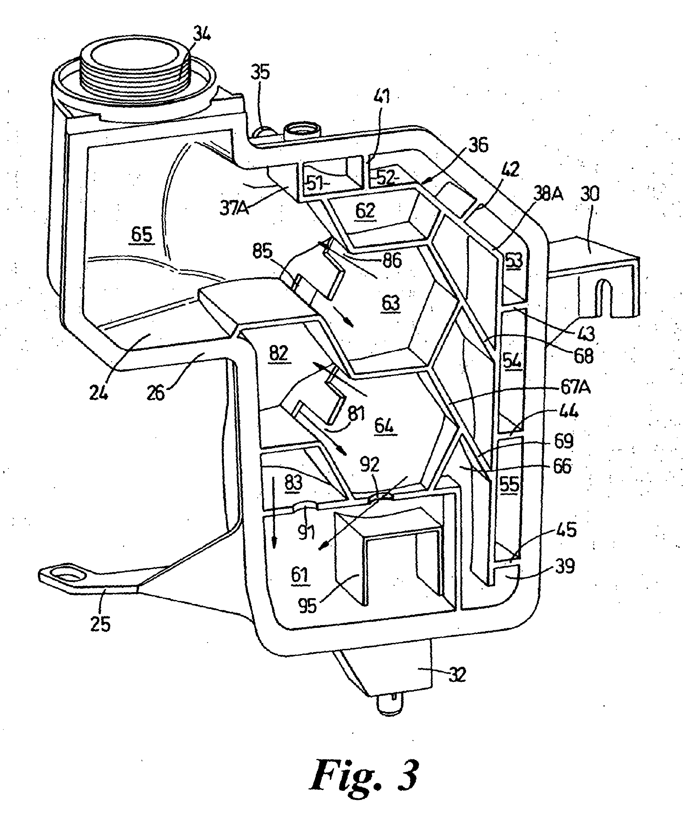

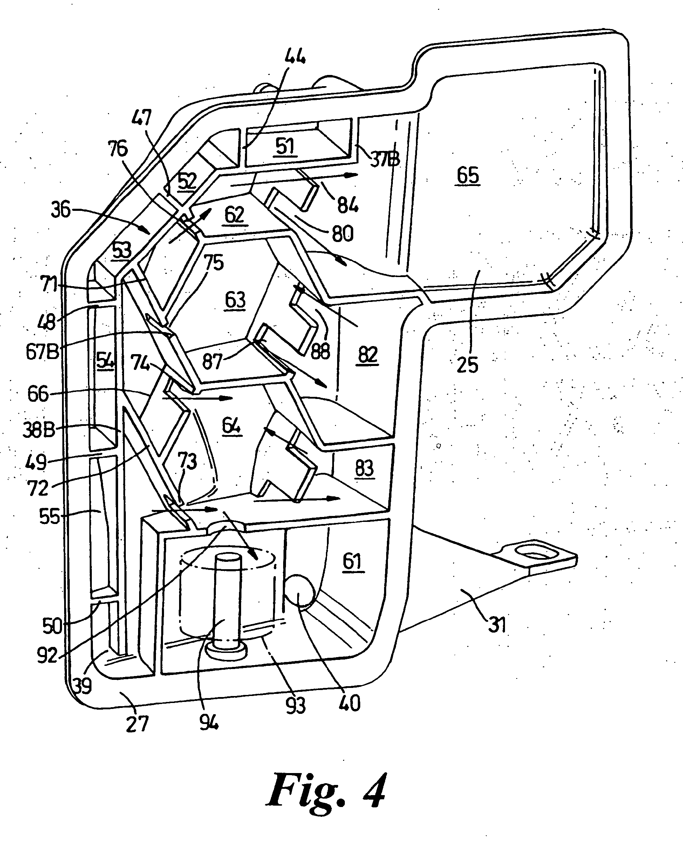

With further reference to Figs. 2 to 4, it can be seen that the expansion tank 21 comprises a housing 20 formed from two generally dish-shaped moulded side components 24, 25 joined together through substantially vertical joint faces 26 and 27 to give a hollow body of generally rectangular cross-section. The side components, more conveniently referred to as the left hand moulding 24 and the right hand moulding 25, are made of a suitable engineering plastics material, e.g. polyamide, glass reinforced polypropylene, polycarbonate, etc. and are welded or otherwise joined and sealed together by any suitable technique, for example hot plate welding. Mounting brackets 29, 30, 31 & 32 are formed integrally with the mouldings 24 & 25 on their external surfaces.

At the upper end of the left hand moulding 24 there is a filler neck 34 for closure by a filler cap (not shown) and an inlet port 35 for connection to the tank feed hose 22. The filler cap incorporates the normal pressure control valve and anti-vacuum valve. At the lower end of the right hand moulding 25 there is a main outlet port 40 for connection to the return hose 23.

The interior of the housing 20 is subdivided into passageways and chambers by internal divider walls which are formed from webs moulded integrally in each moulding 24, 25. Most, but not all of the webs which form the internal divider walls in one moulding are matched by a corresponding web in the other moulding and are joined together at the vertical joint faces 26, 27. However, there are other webs which are not matched in this way as will be described later in further detail. The divider walls also help to reinforce the tank by interconnecting the side walls and the upper and lower walls of the housing 20.

The inlet port 35 opens into an inlet passageway 36 of a generally rectangular cross-section which is formed on the inner surface of a sidewall 28 of the housing 20 and which extends from the inlet port 35 to the bottom of the housing 20. The inlet passageway 36 has an upper end wall 37 (37A on the left hand moulding 24; 37B on the right hand moulding 25), an inner sidewall 38 formed in the two mouldings as 38A & 38B, and an opening 39 discharging into the bottom of the housing 20.

The inlet passageway 36 is provided with a plurality of baffles 41-45 & 46-50 formed integrally with the left and right hand mouldings 24, 25. The baffles 41-50 extend up to the respective vertical joint faces 26 & 27 of the mouldings 24 & 25 and are at different distances along the passageway from the inlet port 35. The baffles are arranged so that each baffle 41-45 on one moulding 24 is adjacent and offset relative to a corresponding baffle 46-50 on the other moulding 25 so that the baffles occur in off-set pairs 41 & 46; 42 & 47; 43 & 48; 44 & 49; 45 & 50 spaced along the length of the inlet passageway 36 to form swirl chambers or bays 51-55 between one adjacent pair of baffles and the next.

The interior of the tank 21 is subdivided into a plurality of interconnected chambers and compartments, including a top chamber 65 open to the filler neck 34, a bottom chamber 61 open to the outlet port 40, and a plurality of hexagonal, or part-hexagonal cross-section chambers arranged in the manner of a honeycomb so that the chambers form vertical columns with common divider walls. The term part-hexagonal is used here to describe a polygonal cross-section of which a part is recognisably part of a hexagon, e.g. two adjacent equal length sides arranged at 120°. In the present example there is a central column of chambers arranged above the bottom chamber 61, the column comprising an upper pentagonal chamber 62 (shown as trapezoidal in Fig.2), an intermediate hexagonal chamber 63 and a lower hexagonal chamber 64. The walls of the central column of chambers 62-64 are formed in the two mouldings 24 & 25 and are welded together at the joint faces 26 & 27. The walls of chambers 62-64 which are closest to the inlet passageway 36 form a continuous common zigzag divider wall 67 (67A in the left hand moulding 24 and 67B in the right hand moulding 25) and this, together with the adjacent inner walls of the inlet passageway 36, forms an upwardly extending passageway or riser 66.

Below the top chamber 65 and above the bottom chamber 61 there is an offset column comprising an upper part-hexagonal chamber 82 and a lower part-hexagonal or trapezoidal chamber 83, both on the other side of the central column of chambers 62-64 to the riser 66.

The riser 66 is partially intersected by one pair of angled walls 68, 69 on the left hand moulding 24 and by another pair of angled walls 71, 72 on the right hand moulding 25 to give structural reinforcement and stiffening: Although the pairs of angled walls 68, 69 & 71, 72 extend to the respective joint face 26, 27 they are angled in different directions so do not impede flow. The riser 66 is connected at its lower end to the opening 39 from the inlet passageway 36 and is also connected into the central column of chambers 62-64 by vertically spaced outlets formed by slots 73-76 in the zigzag divider wall 67. The slots extend away from the joint face 27 on the right hand moulding 25. Slots 73 and 74 connect the riser 66 to the lower hexagonal chamber 64 at its upper and lower regions, slot 75 connects the riser 66 to the intermediate hexagonal chamber 63 at its central or mid height region and slot 76 connects the riser 66 to the upper pentagonal chamber 62 at its lower region. When considering flow into and out of the central column of chambers 62-64, these slots 73-76 are more conveniently referred to as entry slots.

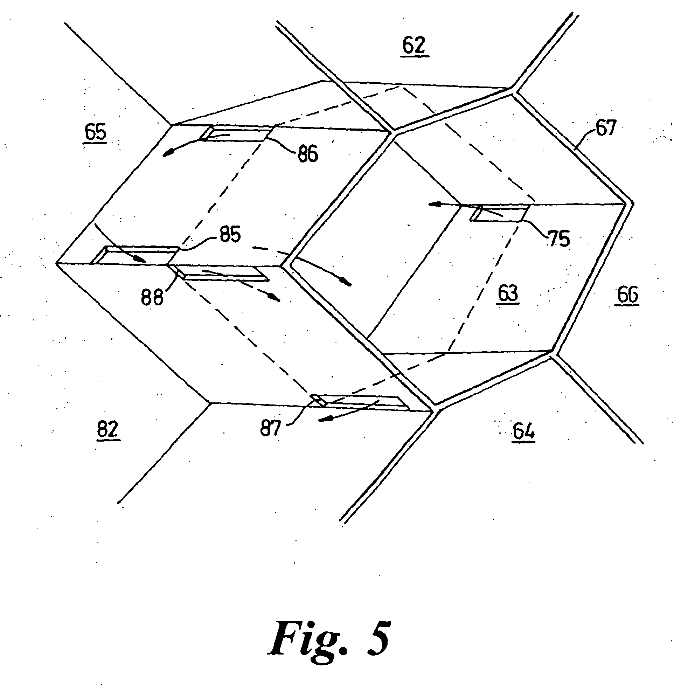

Each chamber of the central column of chambers 62-66 is connected to one or more adjacent chambers by slots formed in the common divider walls. Fig.5 shows, by way example, the intermediate hexagonal chamber 63 which has a zigzag side divider wall 67 which is common with the riser 66, the entry slot 75 allowing the chamber 63 to receive coolant from the riser. Another zigzag divider wall is shared with the top chamber 65 and the adjacent part-hexagonal chamber 82. There is an exit slot 85 in the mid-height portion of the sidewall of the left hand moulding 24 which separates chamber 63 from the top chamber 65, the exit slot 85 extending from the joint surface 26 and interconnecting the base of the top chamber 65 with the interior of the intermediate hexagonal chamber 63. There is also a vent formed by a slot 86 in the same sidewall, the vent slot 86 extending away from the joint face 26 and connecting the upper region of the intermediate hexagonal chamber 63 with the top chamber 65. Another exit slot 87 is formed in the lower portion of the sidewall of the right hand moulding 25 which separates chamber 63 from the adjacent upper part-hexagonal chamber 82, the exit slot 87 extending from the joint face 27 and interconnecting the base region of the intermediate hexagonal chamber 63 with the mid-height region of the upper part-hexagonal chamber 82. There is also a vent slot 88 extending from the joint face 27 in the right hand moulding 25 at the mid-height region of the intermediate hexagonal chamber 63 to allow gas bubbles to escape from the upper region of the upper part-hexagonal chamber 82.

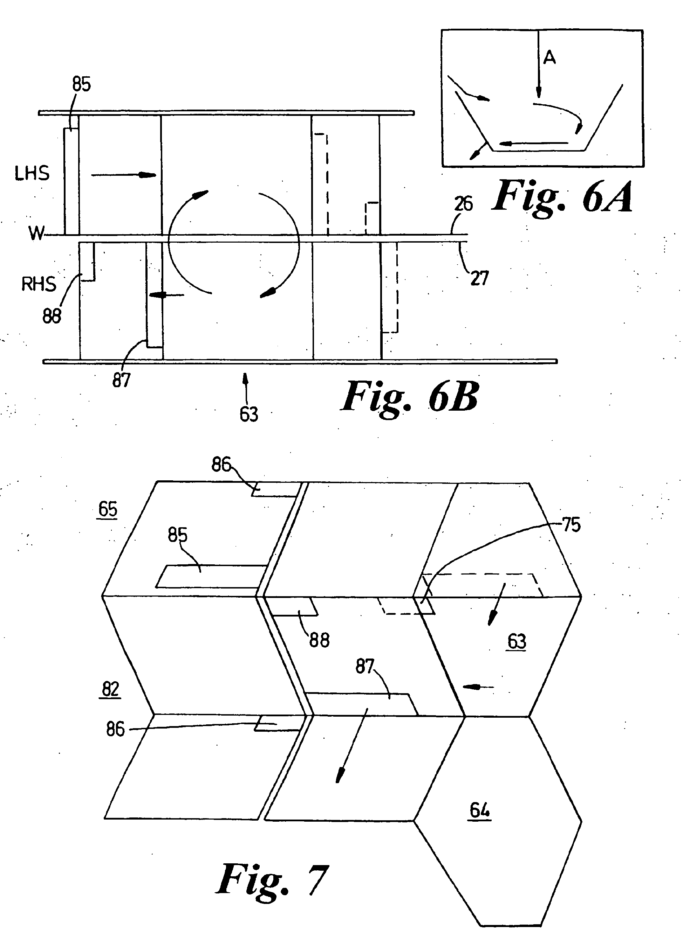

All the hexagonal or part hexagonal chambers 62-64 or 82-83 have substantially the same arrangement of vent slots and entry and exit slots in similar locations to those shown for the intermediate hexagonal chamber 63 and hence the other chambers will not be described in detail. The entry and exit slots 85 and 87 allow liquid coolant to flow into and out of the chamber 63 as is shown schematically in Figs 6A, 6B and 7. The liquid coolant flows into the chamber through the mid-height entry slot 85 and swirls clockwise in a horizontal swirl as shown and exits through the exit slot 87 in the base of the chamber with very little interference to the flow. The exit slot 87 is arranged so that outflow from the chamber is substantially tangential to the swirl

The lower hexagonal chamber 64 is connected to the bottom chamber 62 by an aperture 92 in its base, the aperture being formed by two half-moon slots extending away from the joint faces 26, 27. Similarly, the lower trapezoidal chamber 83 in the offset column is connected to the bottom chamber 62 by an aperture 91 in its base, the aperture being formed by a single half-moon slot in the joint face 26 of the left hand moulding 24.

The bottom chamber 61 houses a coolant level sensor comprising a float 93 guided for vertical movement on a hollow post 94 formed integrally with the right hand moulding 25. The float 93 carries a magnet such that the vertical movement of the float is sensed by a reed switch (not shown) mounted in the bore of the hollow post 94. A shroud or cowl 95 is formed integrally with the left hand moulding 24 and extends into the bottom chamber 62 beyond the joint face 26 into the right hand moulding 25 with a small clearance gap between the end of the cowl 95 and the adjacent inner surface of the right hand moulding 25. Thus the float 93 is substantially surrounded at the top and sides while readily floating in the coolant. The cowl 95 prevents coolant from the aperture 92 impinging directly onto the float 93 and pushing the float downwards and also helps prevent false readings from the float which may be due to movement of coolant during vehicle operation.

When the engine 11 is running about 5% of the coolant flow generated by the pump 12 is passed through the expansion tank 21. Typically between 0.5 and 6 litres per minute of coolant is passed through the tank dependant upon engine speed. With a cold engine 11 and cooling system, the normal level of liquid coolant in the expansion tank 21 is such that the tank is approximately 40% to 48% full of liquid coolant. Warm coolant from the engine is pumped by the pump 12 from the engine 11 into the delivery hose 13 through the tank feed hose 22 and into the expansion tank 21 through the inlet port 35. From the inlet port 35 the coolant is directed through the inlet passageway 36, the baffles 41-50 providing a high resistance to the pumped coolant as it passes along the passageway 36 from the inlet port 35 and through the bays 51-55. The coolant is caused to swirl in the bays 51-55, being subject to a reversal of the direction of flow between pairs of baffles. In this way the baffles 41-50 provide a high resistance to regulate the rate of coolant flow through the expansion tank 21 from the inlet port 35 to the outlet port 40 without the use of a restrictor orifice as is conventionally used for this purpose. Such restrictor orifices tend to cause frothing of the coolant and thus make the degassing function more difficult. The total pressure drop from inlet port 35 to the opening 39 at the lower end of the inlet passageway may be in the order of 1bar at maximum engine speed. Furthermore, the vortices formed by the swirl of coolant in the bays 51-55 cause microscopic air and vapour bubbles to collect in the centre of the bays where they coagulate into larger bubbles which are carried away with the main flow of liquid coolant. These bubbles can rise rapidly in the riser 66 from where they can escape, as will be explained below.

Coolant flows from the passageway 36 to the bottom of the riser 66. At relatively low flow rates (less than 1litre per minute or 2000 rpm engine speed), coolant passes readily through the entry slots 73 and 74 into the lower hexagonal chamber 64 and out through the aperture 92 into the bottom chamber 61 from where it is delivered back to the pump 12 through the tank return hose 23 and the pump return hose 16 by way of the outlet port 40. Coolant can also exit the lower hexagonal chamber 64 via an exit slot 89 (corresponding to the exit slot 87 in Fig 5) into the lower part-hexagonal chamber 83 and through aperture 91 into the bottom chamber 62. The flow of hot coolant to the outlet port is assisted by the pressure drop between the inlet port 35 and the outlet port 40. At the low flow rates just described, the level of coolant in the riser 66 increases by only a small amount above the general level in the tank 21 and there is little or no flow into the intermediate hexagonal chamber 63 or the upper pentagonal chamber 62 where the coolant is relatively stagnant. In this way the hot coolant delivered by the engine undergoes no substantial mixing with the mass of liquid coolant in tank 21.

By minimising the volumetric capacity of the bottom chamber 61 and preventing mixing with the main volume of coolant in the tank, the heat lost from the coolant between the inlet port 35 and the outlet port 40 is greatly reduced compared to a conventional expansion tank, particularly in the period immediately following a cold engine start. Hence there can be an improved warm-up of the engine, reducing exhaust emissions and improving heater performance.

As engine speed and coolant flow increase further, the coolant level in the riser 66 increases so that liquid coolant flows through the higher entry slots 74 75 into the intermediate chamber 62. Any bubbles or foam separated out of the coolant can float to the relatively stagnant region at to top of the riser 66 and escape through entry slot 76 into the upper chamber 63. At very high flow rates the riser can fill completely and coolant flows through entry slot 76 into the top chamber 62. Thus the divider wall between the riser 66 and the central column of chambers 62, 63 and 64 acts as a weir having outlets 73, 74, 75 and 76 at different heights in the riser so that at low rates of coolant flow the flow from the riser is predominantly into the lower chamber 64 only, at intermediate rates of coolant flow the flow from the riser is predominantly into both the lower chamber 64 and the intermediate chamber 63 and at higher rates of coolant flow the flow from the riser is into all the chambers 62, 63 and 64.

Bubbles or foam directed through entry slot 76 into the upper chamber 62 can escape into the top chamber 65 through vent 84 while liquid coolant can drain from the upper chamber 62 into the top chamber 65 through exit slot 80 to mix with any coolant already present in the top chamber 65. The liquid coolant flows down from the top chamber 65 through exit slot 85 into the intermediate hexagonal chamber 63 from where it flows into the upper part-hexagonal chamber 82 through exit slot 87 and from there through exit slot 81 into the lower hexagonal chamber 64 from where it flows to the outlet port 40 as previously described. Thus by arranging two columns of chambers side by side, flow into a chamber of one column flows into an adjacent lower chamber of the other column while bubbles or froth rising to the top of a chamber in one column can escape into an adjacent higher chamber of the other column.

High volume flow rates (e.g. above 3 to 6 litres per minute) can result in foam being present in the expansion tank 21 and in such cases the foam will spill into the different height chambers as the coolant level in the riser 66 increases. The present construction of tank with its multiple chambers and flow of the coolant through the different chambers at progressively different levels allows coolant containing trapped foam to remain in the tank for a relatively long time to allow a high degree of degassing while still allowing a high flow rate for degassed coolant.

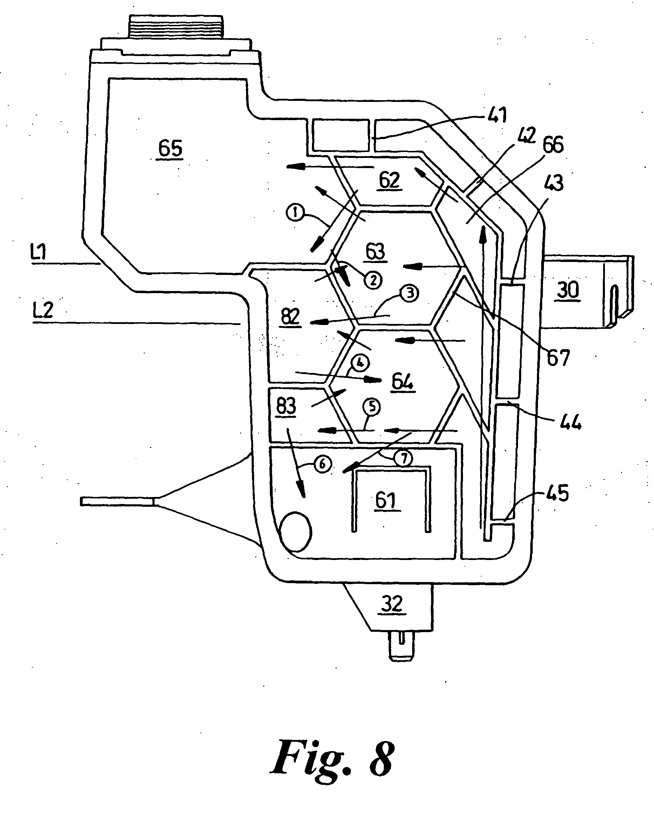

The flow through the tank 21 is shown in Fig 8 in which most of the reference numbers have been omitted for the sake of clarity. The coolant flow from the top chamber 62 to the bottom chamber 61 passes through the different exit slots 85 and 87 in the sequence labelled 1 to 5 and then either 6 or 7 into the bottom chamber. The froth or foam tends to rise through the tank to chambers 62, 63, and 65 as shown, and the coolant level in normal running tends to rise to levels between the horizontal lines L1 and L2.

By directing the incoming stream of coolant through the different chambers, there is a substantial area of hot coolant exposed to the air in each chamber above the level of coolant enabling this air to expand as a result of heating so that the design pressure of the cooling system can be achieved under normal operating conditions. This is an advantage in helping to avoid cavitation of the pump 12.

It will be appreciated that the chambers 61-65, 82,83, riser 66 and pipe 36 can be incorporated in the mouldings 24,25 of the tank without additional components, the horizontal wall with slots and apertures being formed at the vertical joint faces 26 & 27. This allows for relatively simple mould tools. The interconnecting chamber walls within the tank 21 help to strengthen the tank. Indeed, for further strengthening, a further hexagonal chamber can be created in the top chamber 65 where it is bordered by the pentagonal chamber 62, the intermediate hexagonal chamber 63 and the upper part-hexagonal chamber 82.

The outer walls of the tank may be of any desired shape to conform to the space available within an engine compartment. The chambers 62-65, & 82, 83 need not be hexagonal or part hexagonal and may be any intermeshing shape which accommodates the flow of coolant from the riser 66, through the chambers to the outlet port 40, whilst permitting the escape of gas from the coolant. These shapes might include octagons with adjoining squares or just rectangles. The outer walls of each moulding can be slightly domed away from the divider walls to give a quilted appearance on the outside, the doming helps to reduce the stress levels in the mouldings 24, 25. However, one advantage of hexagons is that its closer approximation to a circle allows the stresses at the intersections of outer wall and divider walls to be reduced.

In a modification (not shown), a further column of hexagonal chambers is arranged between the riser 66 and the central column of hexagonal chambers 62-64. The additional entry slots are shown in dotted outline in Figs. 6 & 7.

It will be appreciated that the example described incorporates several advantageous novel features which in some circumstances might be still be useful when used in their own right. For example, the use of two mouldings with a vertical split allows for the ready production of vertical and horizontal and inclined divider walls which can have ports or openings easily created by slots or other cut-outs extending from the vertical joint face. Also, the labyrinthine inlet passageway could be used with any type of expansion tank as could the staggered offset columns of chambers.

## Claims

1. An expansion tank (21) for the cooling system of a liquid-cooled internal combustion engine (11), the tank comprising a housing (20) having an inlet port (35) for connection to a supply of coolant discharged from the engine, the inlet port opening into an inlet passageway (36) in the tank and extending from the inlet port towards an opening (39) within the tank, the inlet passageway (36) having a plurality of baffles (41, 42, 43, 44, 45, 46, 47, 48, 49, 50) therein forming a labyrinthine flow path for the coolant so that in use flow of coolant through the inlet passageway induces a pressure loss between the inlet port (35) and the opening (39), **characterized in that** at least some of the baffles are arranged in pairs (41,46; 42,47; 43,48; 44,49; 45,50), the baffles being formed alternately on one side of the inlet passageway and the other, the length of the inlet passageway between one adjacent pair of baffles and the next forming a respective swirl chamber (51, 52, 53, 54, 55) in which the coolant is induced to swirl.

2. A tank according to claim 1, wherein the inlet passageway (36) is formed integrally with the housing (20), being located on an inner surface of the wall (28) of the housing with said inner surface forming a wall of the inlet passageway.

3. A tank according to claim 1 or claim 2, wherein the inlet port (35) is an the upper portion of the tank and the inlet passageway (36) extends from the top of the tank towards the bottom of the tank, the opening (39) being at the lower end of the inlet passageway adjacent the bottom of the tank.

4. A tank according to any preceding claim, wherein the inlet passageway connects with an upwardly extending passageway having at least three vertically spaced outlets (73, 74, 75, 76) for the discharge of coolant at different heights within the tank.

5. A tank according to claim 4, wherein the housing defines at least three interconnected chambers (62, 63, 64) arranged at different heights within the tank, and the vertically spaced outlets (73, 74, 75, 76) serve to discharge coolant into respective chambers at said different heights within the tank, the chambers (62, 63, 64) being arranged in series so that, in use, coolant flows from one chamber into the next lower chamber and towards an outlet port (40) adjacent the bottom of the tank.

6. A tank according to claim 5, wherein the chambers are arranged in at least two side by side vertical columns with chambers (62, 63, 64) in one column being vertically offset relative to the chambers (82, 83) in the other column.

7. A tank according to claim 6, wherein, in use, the coolant in an upper chamber (63; 82) in one column flows to an offset lower chamber (82; 64) in another column.

8. A tank according to any of claims 5-7, wherein at least some of the chambers (63, 64) have a respective coolant inlet (85, 81) and a respective coolant exit (87) arranged so that in use coolant swirls in one rotational direction within the chamber with the coolant flowing tangentially of the swirl through the exit.

9. A tank according to any preceding claim wherein the housing (20) is moulded from a plastics material as two separate side components (24, 25) with the internal walls being moulded integrally with the external side walls, said moulded side components being joined together through respective vertical joint faces (26, 27).

10. A tank according to claim 9, wherein the baffles (41, 42, 43, 44, 45, 46, 47, 48, 49, 50) of the inlet passageway (36) are formed on each of said two moulded side components (24, 25).

11. A tank according to claim 9 or claim 10, wherein the pairs of baffles (41,46; 42,47; 43,48; 44,49; 45,50) are arranged so that one baffle (41, 42, 43, 44, 45) of each pair is on one moulded side component (24) and the other baffle (46, 47, 48, 49, 50) of each pair is on the other moulded side component (25).

12. A tank according to any of claims 9-11, wherein one of said side components has a post upon which is guided for vertical movement a float for sensing coolant level.

13. A tank according to any of claims 9-12, when dependent upon any of claims 5-8, wherein the path of coolant into or out of one of said chambers (63) is by means of a slot (87, 88) extending from the joint face (27) of one of the moulded side components (25).

## Patentansprüche

1. Ausdehnungsbehälter (21) für das Kühlsystem eines flüssigkeitsgekühlten Verbrennungsmotors (11), wobei der Behälter ein Gehäuse (20) mit einem Einlasskanal (35) zur Verbindung mit einer Zufuhr von Kühlmittel, das von dem Motor abgegeben wird, umfasst, wobei der Einlasskanal in einen Einlassdurchgang (36) in den Behälter mündet und sich von dem Einlasskanal hin zu einer Öffnung (39) in dem Behälter erstreckt, wobei der Einlassdurchgang (36) mehrere Leitwände (41, 42, 43, 44, 45, 46, 47, 48, 49, 50) darin aufweist, die einen labyrinthischen Flussweg für das Kühlmittel bilden, so dass bei Gebrauch der Fluss von Kühlmittel durch den Einlassdurchgang einen Druckverlust zwischen dem Einlasskanal (35) und der Öffnung (39) hervorruft, **dadurch gekennzeichnet, dass** mindestens einige der Leitwände paarweise angeordnet sind (41,46; 42,47; 43,48; 44,49; 45,50), wobei die Leitwände abwechselnd an einer Seite des Einlassdurchgangs und der anderen ausgebildet sind, wobei die Länge des Einlassdurchgangs zwischen einem angrenzenden Paar von Leitwänden und dem nächsten eine jeweilige Wirbelkammer (51, 52, 53, 54, 55) bildet, in dem eine Verwirbelung des Kühlmittels hervorgerufen wird.

2. Behälter nach Anspruch 1, wobei der Einlassdurchgang (36) einstückig mit dem Gehäuse (20) ausgebildet ist und sich an einer inneren Oberfläche der Wand (28) des Gehäuses befindet, wobei die innere Oberfläche eine Wand des Einlassdurchgangs bildet.

3. Behälter nach Anspruch 1 oder 2, wobei der Einlasskanal (35) an dem oberen Abschnitt des Behälters ist und der Einlassdurchgang (36) sich von der Oberseite des Behälters hin zu der Unterseite des Behälters erstreckt, wobei die Öffnung (39) an dem unteren Ende des Einlassdurchgangs angrenzend an die Unterseite des Behälters ist.

4. Behälter nach einem vorstehenden Anspruch, wobei der Einlassdurchgang mit einem sich nach oben erstreckenden Durchgang mit mindestens drei vertikal beabstandet angeordneten Auslässen (73, 74, 75, 76) für die Abgabe von Kühlmittel auf verschiedenen Höhen in dem Behälter verbunden ist.

5. Behälter nach Anspruch 4, wobei das Gehäuse mindestens drei miteinander verbundene Kammern (62, 63, 64) definiert, die auf verschiedenen Höhen in dem Behälter angeordnet sind, und die vertikal beabstandet angeordneten Auslässe (73, 74, 75, 76) zum Ausgeben von Kühlmittel in jeweilige Kammern auf den verschiedenen Höhen in dem Behälter dienen, wobei die Kammern (62, 63, 64) in Reihe angeordnet sind, so dass bei Gebrauch Kühlmittel von einer Kammer in die nächstniedrigere Kammer und hin zu einem an die Unterseite des Behälters angrenzenden Auslasskanal (40) fließt.

6. Behälter nach Anspruch 5, wobei die Kammern in mindestens zwei nebeneinander befindlichen vertikalen Säulen angeordnet sind, wobei die Kammern (62, 63, 64) in einer Säule relativ zu den Kammern (82, 83) in der anderen Säule vertikal versetzt sind.

7. Behälter nach Anspruch 6, wobei bei Gebrauch das Kühlmittel in einer oberen Kammer (63; 82) in einer Säule zu einer versetzten niedrigeren Kammer (82; 64) in einer anderen Säule fließt.

8. Behälter nach einem der Ansprüche 5 - 7, wobei mindestens einige der Kammern (63, 64) einen jeweiligen Kühlmitteleinlass (85, 81) und einen jeweiligen Kühlmittelausgang (87) haben, derart angeordnet, dass bei Gebrauch Kühlmittel in einer Drehrichtung in der Kammer verwirbelt, wobei das Kühlmittel tangential zu dem Wirbel durch den Ausgang fließt.

9. Behälter nach einem vorstehenden Anspruch, wobei das Gehäuse (20) aus einem Kunststoffmaterial als zwei getrennte Seitenkomponenten (24, 25) geformt ist, wobei die inneren Wände integriert mit den äußeren Seitenwänden geformt sind, wobei die geformten Seitenkomponenten durch jeweilige vertikale Verbindungsflächen (26, 27) miteinander verbunden sind.

10. Behälter nach Anspruch 9, wobei die Leitwände (41, 42, 43, 44, 45, 46, 47, 48, 49, 50) des Einlassdurchgangs (36) an jeder der beiden geformten Seitenkomponenten (24, 25) gebildet sind.

11. Behälter nach Anspruch 9 oder Anspruch 10, wobei die Paare von Leitwänden (41,46; 42,47; 43,48; 44,49; 45,50) so ausgelegt sind, dass eine Leitwand (41, 42, 43, 44, 45) jedes Paars sich auf einer geformten Seitenkomponente (24) befindet und die andere Leitwand (46, 47, 48, 49, 50) jedes Paars sich auf der anderen geformten Seitenkomponente (25) befindet.

12. Behälter nach einem der Ansprüche 9 - 11, wobei eine der Seitenkomponenten eine Stütze aufweist, an der ein Schwimmer zum Erfassen des Kühlmittelstands für eine vertikale Bewegung geführt wird.

13. Behälter nach einem der Ansprüche 9 - 12, wenn abhängig von einem der Ansprüche 5 - 8, wobei der Weg des Kühlmittels in eine oder aus einer der Kammern (63) mittels eines Schlitzes (87, 88) verläuft, der sich von der Verbindungsfläche (27) einer der geformten Seitenkomponenten (25) erstreckt.

## Revendications

1. Réservoir d'expansion (21) pour le système de refroidissement d'un moteur à combustion interne refroidi par liquide (11), le réservoir comprenant un carter (20) ayant un orifice d'admission (35) destiné à être raccordé à une alimentation de réfrigérant déchargé du moteur, l'orifice d'admission s'ouvrant dans un passage d'admission (36) dans le réservoir et s'étendant depuis l'orifice d'admission vers une ouverture (39) dans le réservoir, le passage d'admission (36) comportant une pluralité de chicanes (41, 42, 43, 44, 45, 46, 47, 48, 49, 50) qui forment dans celui-ci un chemin d'écoulement labyrinthique du réfrigérant de telle sorte que, durant le service, l'écoulement du réfrigérant à travers le passage d'admission induise une perte de pression entre l'orifice d'amission (35) et l'ouverture (39), **caractérisé en ce qu'**au moins certaines des chicanes sont agencées en paires (41,46 ; 42,47 ; 43,48 ; 44,49 ; 45,50), les chicanes étant formées de façon alternée sur un côté du passage d'admission et l'autre, la longueur du passage d'admission entre une paire adjacente de chicanes et la suivante formant une chambre de turbulence respective (51, 52, 53, 54, 55) dans laquelle des turbulences du réfrigérant sont induites.

2. Réservoir selon la revendication 1, dans lequel le passage d'admission (36) est formé solidairement au carter (20), étant situé sur une surface interne de la paroi (28) du carter, ladite surface interne formant une paroi du passage d'admission.

3. Réservoir selon la revendication 1 ou la revendication 2, dans lequel l'orifice d'admission (35) se trouve dans la partie supérieure du réservoir et le passage d'admission (36) s'étend depuis le haut du réservoir vers le bas du réservoir, l'ouverture (39) se trouvant à l'extrémité inférieure du passage d'admission à proximité du fond du réservoir.

4. Réservoir selon l'une quelconque des revendications précédentes, dans lequel le passage d'admission se raccorde à un passage s'étendant vers le haut présentant au moins trois sorties espacées verticalement (73, 74, 75, 76) pour la décharge d'un réfrigérant à différentes hauteurs dans le réservoir.

5. Réservoir selon la revendication 4, dans lequel le carter définit au moins trois chambres interconnectées (62, 63, 64) disposées à différentes hauteurs dans le réservoir, et les sorties espacées verticalement (73, 74, 75, 76) servent à décharger le réfrigérant dans des chambres respectives auxdites hauteurs différentes dans le réservoir, les chambres (62, 63, 64) étant agencées en série de telle sorte que, durant le service, le réfrigérant s'écoule d'une chambre dans la chambre inférieure suivante et vers un orifice de sortie (40) situé à proximité du fond du réservoir.

6. Réservoir selon la revendication 5, dans lequel les chambres sont disposées dans au moins deux colonnes verticales côte à côte, les chambres (62, 63, 64) dans une colonne étant décalées verticalement par rapport aux chambres (82, 83) dans l'autre colonne.

7. Réservoir selon la revendication 6, dans lequel, durant le service, le réfrigérant dans une chambre supérieure (63 ; 82) dans une colonne s'écoule vers une chambre inférieure décalée (82 ; 64) dans une autre colonne.

8. Réservoir selon l'une quelconque des revendications 5 à 7, dans laquelle au moins certaines des chambres (63, 64) comportent une admission de réfrigérant respective (85, 81) et une sortie de réfrigérant respective (87) agencée de telle sorte que durant le service, le réfrigérant tourbillonne dans un sens de rotation dans la chambre, le réfrigérant s'écoulant tangentiellement à la turbulence à travers la sortie.

9. Réservoir selon l'une quelconque des revendications précédentes, dans lequel le carter (20) est moulé à partir d'un matériau plastique sous forme de deux composants latéraux séparés (24, 25), les parois internes étant moulées solidairement aux parois latérales externes, lesdits composants latéraux moulés étant joints ensemble par le biais de faces de jointure verticales (26, 27).

10. Réservoir selon la revendication 9, dans lequel les chicanes (41, 42, 43, 44, 45, 46, 47, 48, 49, 50) du passage d'admission (36) sont formées sur chacun desdits deux composants latéraux moulés (24, 25).

11. Réservoir selon la revendication 9 ou la revendication 10, dans lequel les paires de chicanes (41,46 ; 42,47 ; 43,48 ; 44,49 ; 45,50) sont disposées de telle sorte qu'une chicane (41, 42, 43, 44, 45) de chaque paire se trouve sur un composant latéral moulé (24) et l'autre chicane (46, 47, 48, 49, 50) de chaque paire se trouve sur l'autre composant latéral moulé (25).

12. Réservoir selon l'une quelconque des revendications 9 à 11, dans lequel l'un desdits composants latéraux comporte un montant sur lequel est guidé un flotteur à déplacement vertical destiné à détecter le niveau de réfrigérant.

13. Réservoir selon l'une quelconque des revendications 9 à 12, dépendantes de l'une quelconque des revendications 5 à 8, dans lequel le trajet du réfrigérant dans l'une desdites chambres (63) ou hors de celle-ci se fait au moyen d'une fente (87, 88) s'étendant depuis la face de jointure (27) de l'un des composants latéraux moulés (25).
